# FASCICULE DE BREVET EUROPEEN

(11) **EP 1 512 627 B1**
(45) Date de publication et mention de la délivrance du brevet: **15.02.2006**
(21) Numéro de dépôt: 04291981.1
(22) Date de dépôt: 03.08.2004
(51) Int. Cl.: B64D 31/12

(54) **Aéronef pourvu d'inverseurs de poussée**
Flugzeug mit Schubumkehrvorrichtungen
Aircraft with thrust reversers

(30) Priorité: 03.09.2003 FR 0310417
(43) Date de publication de la demande: 09.03.2005
(73) Titulaire: AIRBUS France, 31060 Toulouse (FR)
(72) Inventeur: André, Joan, 31770 Colomiers (FR); Andrieu, Laurent, 31140 Aucamville (FR)
(74) Mandataire: Bonnetat, Christian

(56) Documents cités:
- US-A- 3 572 155
- US-A1- 2002 117 582
- US-B1- 6 311 928

## Description

La présente invention concerne un aéronef pourvu d'inverseurs de poussée.

On sait que de nombreux aéronefs, notamment ceux destinés au transport civil, sont équipés d'inverseurs de poussée permettant d'améliorer le freinage desdits aéronefs lors de l'atterrissage. Ces inverseurs de poussée sont associés aux moteurs des aéronefs et ils sont commandables pour pouvoir passer d'une position inactive repliée à une position active déployée et, inversement, de ladite position active déployée à ladite position inactive repliée. En position active déployée, un inverseur de poussée reçoit le jet du moteur associé et inverse ledit jet, ce qui lui permet de participer au freinage de l'aéronef.

De façon générale, les moteurs d'un aéronef sont équipés d'un inverseur de poussée. L'activation de l'inverseur de poussée d'un moteur est déclenchée par le pilote au moyen d'un organe, du type levier, disposé sur la manette des gaz correspondant à ce moteur. Une action sur ce levier n'est possible que si la manette des gaz est sur une position correspondant au ralenti du moteur.

L'appoint de freinage apporté aux freins d'un aéronef au sol par un inverseur de poussée est très important, de sorte que, notamment dans le cas d'un aéronef multimoteur, la capacité de freinage de la totalité des inverseurs de poussée est excédentaire. Or, chaque inverseur de poussée présente une masse relativement importante et son coût est élevé. On se retrouve donc dans la situation aberrante consistant à ce que l'aéronef doit supporter une masse et des coûts relatifs à des appareils --les inverseurs de poussée-- qui engendrent un excédent non utile de puissance de freinage. De plus, les inverseurs de poussée présentent un risque non nul de déploiement intempestif en vol, qui peut s'avérer catastrophique pour l'aéronef.

La présente invention a pour objet de remédier à ces inconvénients.

A cette fin, selon l'invention, l'aéronef pourvu d'une pluralité de moteurs dont les régimes sont commandés individuellement, entre le ralenti et le plein régime, par des manettes des gaz respectivement associées auxdits moteurs,
est remarquable en ce que :
- certains desdits moteurs de ladite pluralité sont équipés d'inverseurs de poussée commandables pour pouvoir passer d'une position inactive repliée à une position active déployée et, inversement, de ladite position active déployée à ladite position inactive repliée ;
- les autres moteurs de ladite pluralité sont dépourvus de tels inverseurs de poussée ; et
- un dispositif de sécurité est prévu pour inhiber, au moins à partir de la position correspondant au ralenti, l'action des manettes des gaz correspondant auxdits moteurs dépourvus d'inverseurs de poussée, lorsque lesdits inverseurs de poussée sont commandés pour passer de leur position inactive repliée à leur position active déployée.

Ainsi, grâce à la présente invention, il est possible de n'équiper que certains moteurs avec des inverseurs de poussée aptes à fournir l'appoint de freinage nécessaire aux freins de l'aéronef et de faire l'économie, en masse et en coûts, des inverseurs de poussée sur les autres moteurs, tout en évitant des situations de pilotage dangereuses pour lesquelles les moteurs non pourvus d'inverseurs de poussée pourraient ne pas être au ralenti, alors que les inverseurs de poussée seraient en position active déployée. De plus, la présente invention permet de diminuer le risque de déclenchement en vol des inverseurs, puisque le nombre de ceux-ci est réduit.

Bien entendu, la présente invention s'applique à de nombreuses dispositions différentes des moteurs sur ledit aéronef, pourvu que, pour des raisons de stabilité, les moteurs équipés d'inverseurs de poussée soient disposés soit dans le plan vertical médian de l'aéronef soit deux à deux symétriques par rapport à ce plan. Elle s'applique tout particulièrement bien à un aéronef comportant quatre moteurs portés par les ailes dudit aéronef et symétriques deux à deux par rapport au fuselage de celui-ci, de sorte que chaque aile porte un moteur interne et un moteur externe.

Dans ce cas, il est avantageux que lesdits moteurs internes soient pourvus d'inverseurs de poussée, alors que lesdits moteurs externes en sont dépourvus.

Dans un mode de réalisation, ledit dispositif de sécurité comporte un détecteur de la commande desdits inverseurs de poussée au déploiement et des moyens de blocage commandés par ledit détecteur et bloquant, au ralenti, lesdits moteurs dépourvus d'inverseurs de poussée, ces derniers moteurs ayant été préalablement amenés au ralenti par une action volontaire d'un pilote. A cet effet, lesdits moyens de blocage peuvent verrouiller, à la position correspondant au ralenti, les manettes des gaz desdits moteurs dépourvus d'inverseurs de poussée, ces dernières manettes des gaz ayant été préalablement amenées à cette position par une action volontaire d'un pilote.

Selon un mode de réalisation préféré, ledit dispositif de sécurité comporte un détecteur de la commande desdits inverseurs de poussée au déploiement et des moyens imposant le ralenti auxdits moteurs dépourvus d'inverseurs de poussée, quel que soit le régime de ces derniers moteurs. De préférence, lesdits moyens imposant le ralenti auxdits moteurs dépourvus d'inverseurs de poussée agissent sur le débit d'alimentation en carburant de ces derniers moteurs. Dans ce dernier cas, lorsque lesdits inverseurs de poussée sont commandés au déploiement, il est indispensable que lesdits moyens imposant le ralenti aient une autorité supérieure à celle desdites manettes vis-à-vis de la commande de débit d'alimentation en carburant des moteurs.

Notamment pour des raisons de sécurité, il est avantageux que ledit dispositif de sécurité :
- inhibe l'action desdites manettes des gaz correspondant auxdits moteurs dépourvus d'inverseurs de poussée dès qu'au moins l'un des inverseurs de poussée est commandé au déploiement ;
- soit sensible à une information indiquant que ledit aéronef est au contact du sol et n'inhibe l'action desdites manettes des gaz correspondant auxdits moteurs dépourvus d'inverseurs de poussée que lorsque ledit aéronef est au sol ;
- soit sensible à une information représentative d'un seuil de vitesse dudit aéronef et n'inhibe l'action desdites manettes des gaz correspondant auxdits moteurs dépourvus d'inverseurs de poussée que lorsque la vitesse par rapport au sol dudit aéronef est supérieure audit seuil ;
- soit sensible à des informations représentatives des positions respectives desdites manettes des gaz et n'inhibe l'action desdites manettes des gaz correspondant auxdits moteurs dépourvus d'inverseurs de poussée que lorsque toutes lesdites manettes des gaz sont dans une position correspondant au ralenti, sauf éventuellement l'une ou plusieurs des manettes des gaz correspondant auxdits moteurs dépourvus d'inverseurs de poussée ;
- comporte un dispositif d'alarme activé lorsqu'au moins une des manettes des gaz correspondant à l'un desdits moteurs dépourvus d'inverseurs de poussée n'est pas dans sa position correspondant au ralenti ; et
- maintient le ralenti sur lesdits moteurs dépourvus d'inverseurs de poussée pendant une durée prédéterminée après la fin de la commande au déploiement des inverseurs de poussée et le retour de ceux-ci de la position active déployée à la position inactive repliée.

Un tel dispositif de sécurité peut alors comprendre des moyens de calcul, éventuellement incorporés dans l'un des calculateurs de bord de l'aéronef.

Les figures du dessin annexé feront bien comprendre comment l'invention peut être réalisée. Sur ces figures, des références identiques désignent des éléments semblables.
La figure 1 montre schématiquement du dessous un avion quadriréacteur dont les moteurs internes sont équipés chacun d'un inverseur de poussée, lesdits inverseurs de poussée étant en position repliée.
La figure 2 est semblable à la figure 1, sauf en ce qui concerne les inverseurs de poussée qui sont représentés en position déployée.
La figure 3 est le schéma synoptique d'un premier mode de réalisation du dispositif de sécurité conforme à la présente invention.
La figure 4 est le schéma synoptique d'un deuxième mode de réalisation du dispositif de sécurité conforme à la présente invention.
La figure 5 illustre, schématiquement et partiellement, un troisième mode de réalisation dudit dispositif de sécurité.

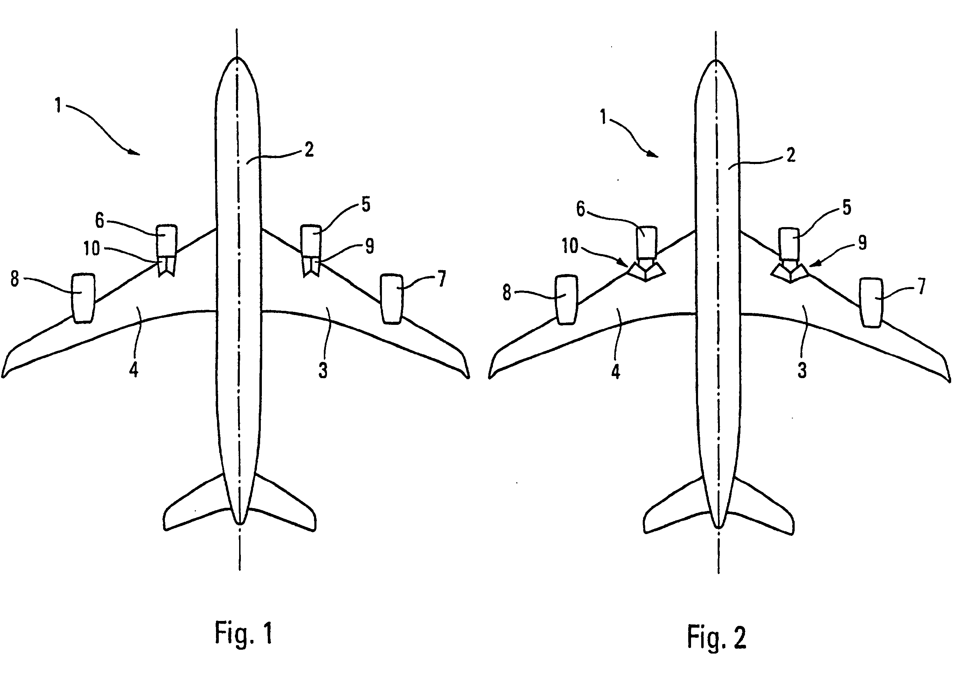

L'avion 1, montré schématiquement du dessous sur les figures 1 et 2, comporte un fuselage 2 et deux ailes 3 et 4, symétriques par rapport audit fuselage. Sur chacune desdites ailes 3 et 4, sont montés un moteur interne 5 ou 6 et un moteur externe 7 ou 8. Les moteurs internes 5 et 6 sont chacun équipés d'un inverseur de poussée 9 ou 10, alors que les moteurs externes 7 et 8 sont dépourvus de tels inverseurs. Sur les figures 1 et 2, on a représenté les inverseurs de poussée 9 et 10 sous la forme d'inverseurs à portes arrière, mais il va de soi qu'ils pourraient présenter une structure différente. Les inverseurs de poussée 9 et 10 sont représentés en position repliée sur la figure 1 et en position déployée sur la figure 2.

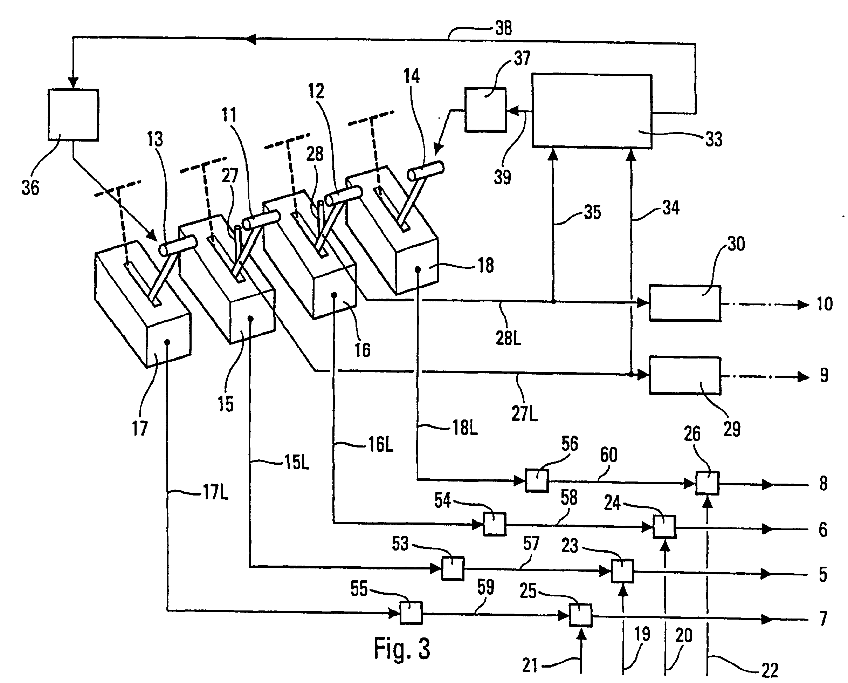

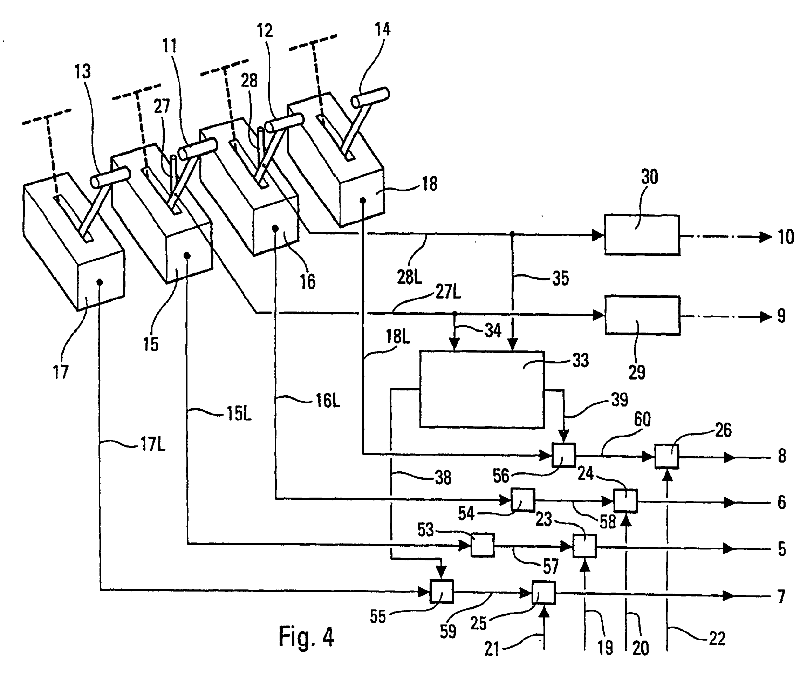

Comme cela est illustré schématiquement sur les figures 3 et 4, le régime de chaque moteur 5 à 8 est commandé par un pilote (non représenté) par l'intermédiaire d'une manette des gaz spécifique 11 à 14, associée à un transducteur 15 à 18 délivrant un signal électrique représentatif de la position de la manette correspondante. Chaque manette 11 à 14 peut occuper n'importe quelle position entre une position de régime maximal (représentée en pointillés) et une position de ralenti (représentée en trait plein).

Les moteurs 5 à 8 sont alimentés en carburant par des circuits spécifiques 19 à 22, sur chacun desquels est monté un dispositif de commande de débit 23 à 26. Les dispositifs de commande de débit 23 à 26 sont respectivement contrôlés par des calculateurs FADEC (Full Authority Digital Engine Control) 53 à 56 dont des signaux de sortie aptes à commander lesdits dispositifs de commande de débit 23 à 26 sont transmis à ces derniers par l'intermédiaire de liaisons respectives 57 à 60. Ces calculateurs FADEC 53 à 56 reçoivent en entrée, par l'intermédiaire de liaisons respectives 15L, 16L, 17L et 18L, les signaux de sortie des transducteurs 15 à 18 qui sont eux-mêmes contrôlés par les manettes 11 à 14. Généralement, les calculateurs FADEC 53 à 56 élaborent lesdits signaux de sortie aptes à commander les dispositifs de commande de débit 23 à 26 en fonction notamment desdits signaux que lesdits calculateurs FADEC 53 à 56 reçoivent respectivement des transducteurs 15 à 18. Par conséquent, le débit de carburant des moteurs 5 à 8, et donc le régime desdits moteurs, dépend généralement des positions respectives des manettes 11 à 14.

Par ailleurs, sur chacune des manettes 11 et 12, respectivement associées aux moteurs internes 5 et 6, est monté un organe 27 ou 28 apte à commander au déploiement et au repliement l'inverseur de poussée 9 ou 10 correspondant, par l'intermédiaire d'un dispositif d'actionnement (par exemple des vérins) 29 ou 30. A cet effet, chaque organe de commande 27 et 28 est apte à engendrer, de façon connue et non représentée, un signal électrique de repliement et un signal électrique de déploiement transmis au dispositif d'actionnement 29 ou 30 correspondant par une liaison respective 27L ou 28L.

Le dispositif de sécurité conforme à la présente invention, représenté sur la figure 3, comporte :
- un détecteur 33, recevant les signaux électriques de repliement et de déploiement circulant dans les liaisons 27L et 28L par l'intermédiaire de liaisons 34 et 35, respectivement ; et
- des dispositifs de blocage commandables 36 et 37, par exemple du type électroaimants, respectivement associés aux manettes des gaz 17 et 18 et commandés par le détecteur 33, respectivement par des liaisons 38 et 39.

Ainsi, lorsque toutes les manettes des gaz 11 à 14 sont amenées par un pilote dans leur position correspondant au ralenti des moteurs 5 à 8 (figure 3) et que les organes de commande 27 et 28 sont actionnés, les inverseurs de poussée 9 et 10 se déploient et ce déploiement est détecté par le détecteur 33 (par les liaisons 34, 35). Le détecteur 33 adresse alors aux dispositifs de blocage 36, 37, par l'intermédiaire des liaisons 38, 39, les ordres de bloquer les manettes 13 et 14 -associées aux moteurs externes 7 et 8 dépourvus d'inverseurs de poussée-- en position de ralenti.

Il en résulte que, tant que les inverseurs de poussée 9 et 10 sont déployés, le régime des moteurs externes 7 et 8 ne peut être accidentellement augmenté. On remarquera que le pilote conserve toutefois la possibilité de passer outre au blocage exercé par les dispositifs 36, 37 sur les manettes 13, 14 en agissant sur ces manettes avec une force supérieure aux forces de blocage exercées par ces dispositifs 36, 37. Il s'agit dans ce cas d'une action volontaire du pilote, le but de la présente invention étant d'éviter des actions involontaires.

En revanche, dès que par actionnement des organes de commande 27 et 28 les inverseurs de poussée 9 et 10 sont commandés au repliement, le signal correspondant est détecté par le détecteur 33 qui inhibe les dispositifs de blocage 36 et 37, les manettes des gaz 13 et 14 sont alors libérées et il est possible de remettre les gaz sur les moteurs externes 7 et 8.

Dans la variante de réalisation illustrée par la figure 4, on retrouve tous les éléments 5 à 38 (y compris les liaisons 15L, 16L, 17L, 18L, 27L et 28L) et 53 à 60 décrits ci-dessus. Dans ce cas, le détecteur 33 peut commander, grâce aux liaisons 38, 39, les calculateurs FADEC 55 et 56 qui commandent respectivement les dispositifs de commande de débit 25 et 26 des moteurs externes 7 et 8, dépourvus d'inverseurs de poussée. Lorsqu'un signal de déploiement parcourt les liaisons 27L et 28L, l'autorité du détecteur 33 sur les calculateurs FADEC 55 et 56 est supérieure à celle que peuvent exercer les manettes 13 et 14 sur ces mêmes calculateurs FADEC. Ainsi, on peut garantir que chacun des moteurs 7 et 8 est amené au ralenti, même si la manette 13 et/ou la manette 14 ne se trouve pas dans la position correspondant au ralenti.

Comme décrit précédemment, au repliement des inverseurs de poussée 9 et 10, le détecteur 33 n'inhibe plus l'action des manettes de gaz 13 et 14.

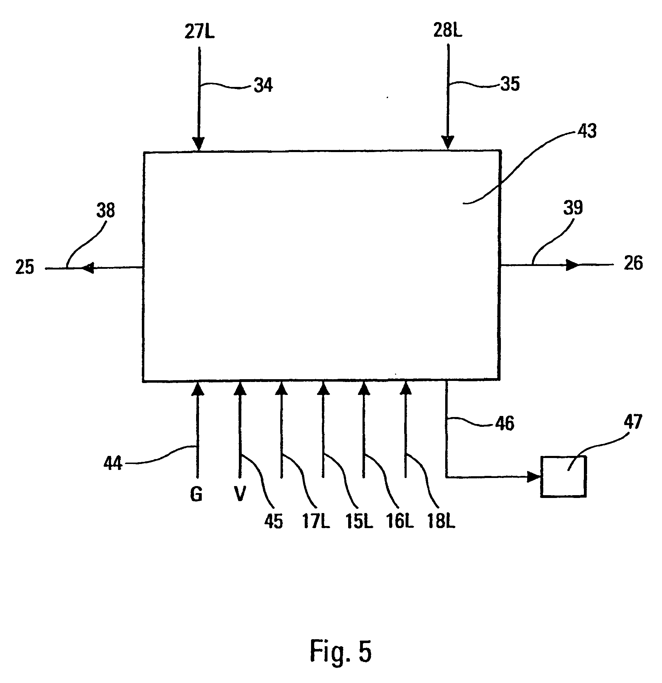

Sur la figure 5, on a représenté un mode de réalisation plus complet 43 du détecteur 33, notamment dans son application au dispositif de la figure 4. Ce détecteur 43 est du type calculateur et il peut être intégré dans un des calculateurs de vol de l'avion1, par exemple un calculateur de commandes de vol adressant des consignes aux calculateurs FADEC 53 à 56 assurant le contrôle des moteurs 5 à 8 dudit avion.

Le détecteur 43, en plus de ses entrées 34 et 35 reliées aux liaisons 27L et 28L comme décrit ci-dessus, comporte :
- une entrée 44, sur laquelle apparaît un signal G, par exemple prélevé de façon connue sur le train d'atterrissage, représentatif du fait que l'avion 1 est au contact du sol ;
- une entrée 45, sur laquelle apparaît un signal V représentatif de la vitesse par rapport au sol de l'avion 1 ; et
- des entrées 15L, 16L, 17L et 18L sur lesquelles apparaissent des signaux représentatifs de la position des manettes 11, 12, 13 et 14, comme indiqué ci-dessus.

Par ailleurs, en plus de ses sorties 38 et 39, le détecteur 43 comporte une sortie 46, reliée à un dispositif d'alarme 47.

Ainsi, il est possible, pour des raisons de sécurité, de ne forcer les moteurs externes 7 et 8 au ralenti que lorsque les conditions suivantes sont présentes isolément ou en combinaison :
- l'avion 1 est au contact du sol ;
- la vitesse par rapport au sol de l'avion est supérieure à un seuil prédéterminé, par exemple égal à 30 noeuds (en effet si la vitesse de l'avion est faible, les conséquences d'un incident survenant lors de l'activation des inverseurs de poussée sont également faibles) ;
- toutes les manettes 11 à 14 sont dans une position correspondant au ralenti, sauf éventuellement au moins l'une des deux manettes 13 ou 14 ; et
- au moins l'un des inverseurs de poussée 9 ou 10 est commandé au déploiement.

Par ailleurs, si l'un des moteurs 7 ou 8 est forcé au ralenti, alors que la manette des gaz 13 ou 14 correspondante n'est pas dans une position correspondant au ralenti, le dispositif d'alarme 47 est déclenché pour prévenir le pilote de l'anomalie.

Lors du retour des inverseurs de poussée 9 et 10 en position repliée, il est avantageux que le détecteur 33 ou 43 maintienne pendant une durée prédéterminée, par exemple égale à 30 secondes, le ralenti sur les moteurs externes 7 et 8. Ainsi, même si le pilote actionne involontairement la manette des gaz 13 ou 14 de l'un de ces moteurs en voulant replier les inverseurs de poussée 9 et 10, il n'en résulte aucun incident fâcheux pour l'avion 1.

## Revendications

1. Aéronef (1) pourvu d'une pluralité de moteurs (5 à 8) dont les régimes sont commandés individuellement, entre le ralenti et le plein régime, par des manettes des gaz (11 à 14) respectivement associées auxdits moteurs,
**caractérisé en ce que** :
- certains (5, 6) desdits moteurs de ladite pluralité (5 à 8) sont équipés d'inverseurs de poussée (9, 10) commandables pour pouvoir passer d'une position inactive repliée à une position active déployée et, inversement, de ladite position active déployée à ladite position inactive repliée ;
- les autres moteurs (7, 8) de ladite pluralité (5 à 8) sont dépourvus de tels inverseurs de poussée ; et
- un dispositif de sécurité (33, 36, 37 - 33, 25, 26 - 43, 25, 26) est prévu pour inhiber, au moins à partir de la position correspondant au ralenti, l'action des manettes des gaz (13, 14) correspondant auxdits moteurs (7, 8) dépourvus d'inverseurs de poussée, lorsque lesdits inverseurs de poussée (9, 10) sont commandés pour passer de leur position inactive repliée à leur position active déployée.

2. Aéronef selon la revendication 1, comportant quatre moteurs (5 à 8) portés par les ailes (3, 4) dudit aéronef et symétriques deux à deux par rapport au fuselage (2) de celui-ci, de sorte que chaque aile (3, 4) porte un moteur interne (5, 6) et un moteur externe (7, 8),
**caractérisé en ce que** lesdits moteurs internes (5, 6) sont pourvus d'inverseurs de poussée (9, 10), alors que lesdits moteurs externes (7, 8) en sont dépourvus.

3. Aéronef selon l'une des revendications 1 ou 2,
**caractérisé en ce que** ledit dispositif de sécurité comporte un détecteur (33) de la commande desdits inverseurs de poussée (9, 10) au déploiement et des moyens de blocage (36, 37) commandés par ledit détecteur (33) et bloquant, au ralenti, lesdits moteurs (7, 8) dépourvus d'inverseurs de poussée, ces derniers moteurs (7, 8) ayant été préalablement amenés au ralenti par une action volontaire.

4. Aéronef selon la revendication 3,
**caractérisé en ce que** lesdits moyens de blocage (36, 37) verrouillent, à la position correspondant au ralenti, les manettes des gaz (13, 14) desdits moteurs (7, 8) dépourvus d'inverseurs de poussée, ces dernières manettes des gaz (13, 14) ayant été préalablement amenées à ladite position correspondant au ralenti par une action volontaire.

5. Aéronef selon la revendication 1 ou 2,
**caractérisé en ce que** ledit dispositif de sécurité comporte un détecteur (33, 43) de la commande desdits inverseurs de poussée (9, 10) au déploiement et des moyens (25, 26) imposant le ralenti auxdits moteurs (7, 8) dépourvus d'inverseurs de poussée, quel que soit le régime de ces derniers moteurs (7, 8).

6. Aéronef selon la revendication 5,
**caractérisé en ce que** lesdits moyens (25, 26) imposant le ralenti auxdits moteurs (7, 8) dépourvus d'inverseurs de poussée agissent sur le débit d'alimentation en carburant de ces derniers moteurs.

7. Aéronef selon l'une des revendications 1 à 6,
**caractérisé en ce que** ledit dispositif de sécurité inhibe l'action desdites manettes des gaz (13, 14) correspondant auxdits moteurs (7, 8) dépourvus d'inverseurs de poussée dès qu'au moins l'un des inverseurs de poussée est commandé au déploiement.

8. Aéronef selon l'une quelconque des revendications 1 à 7,
**caractérisé en ce que** ledit dispositif de sécurité est sensible à une information (G) indiquant que ledit aéronef (1) est au contact du sol et n'inhibe l'action desdites manettes des gaz (13, 14) correspondant auxdits moteurs (7, 8) dépourvus d'inverseurs de poussée que lorsque ledit aéronef (1) est au sol.

9. Aéronef selon l'une des revendications 1 à 8,
**caractérisé en ce que** ledit dispositif de sécurité est sensible à une information (V) représentative d'un seuil de vitesse par rapport au sol dudit aéronef (1) et n'inhibe l'action desdites manettes des gaz (13, 14) correspondant auxdits moteurs (7, 8) dépourvus d'inverseurs de poussée que lorsque la vitesse par rapport au sol dudit aéronef est supérieure audit seuil.

10. Aéronef selon l'une des revendications 1 à 9,
**caractérisé en ce que** ledit dispositif de sécurité est sensible à des informations (15L, 16L, 17L, 18L) représentatives des positions respectives desdites manettes des gaz (11 à 14) et n'inhibe l'action desdites manettes des gaz (13, 14) correspondant auxdits moteurs (7, 8) dépourvus d'inverseurs de poussée que lorsque lesdites manettes des gaz (11 à 14) sont dans une position correspondant au ralenti, sauf éventuellement l'une ou plusieurs des manettes des gaz correspondant auxdits moteurs (7, 8) dépourvus d'inverseurs de poussée.

11. Aéronef (1) selon la revendication 10,
**caractérisé en ce qu'**il comporte un dispositif d'alarme (47) activé par ledit dispositif de sécurité lorsqu'au moins une des manettes des gaz correspondant à l'un desdits moteurs (7, 8) dépourvus d'inverseurs de poussée n'est pas dans la position correspondant au ralenti.

12. Aéronef (1) selon l'une des revendications 1 à 11,
**caractérisé en ce que** ledit dispositif de sécurité maintient le ralenti sur lesdits moteurs (7, 8) dépourvus d'inverseurs de poussée pendant une durée prédéterminée après la fin de la commande au déploiement des inverseurs de poussée et le retour de ceux-ci de la position active déployée à la position inactive repliée.

## Patentansprüche

1. Flugzeug (1), das mit einer Vielzahl von Triebwerken (5 bis 8) ausgestattet ist, deren Drehzahl durch Gashebel (11 bis 14), die mit jeweils einem der Triebwerke verbunden sind, individuell zwischen Leerlauf und Volllast eingestellt werden kann,
**dadurch gekennzeichnet, dass**:
- einige (5, 6) der Triebwerke der Vielzahl (5 bis 8) mit ansteuerbaren Schubumkehrvorrichtungen (9, 10) ausgestattet sind, um von einer inaktiven, eingefahrenen Position in eine aktive, ausgefahrene Position sowie umgekehrt von der aktiven, ausgefahrenen Position in die inaktive, eingefahrene Position wechseln zu können;
- die anderen Triebwerke (7, 8) der Vielzahl (5 bis 8) nicht über solche Schubumkehrvorrichtungen verfügen; und
- eine Sicherheitsvorrichtung (33, 36, 37 - 33, 25, 26 - 43, 25, 26) vorgesehen ist, um zumindest ab der Position, die dem Leerlauf entspricht, die Wirkung der entsprechenden Gashebel (13, 14) der Triebwerke (7, 8) ohne Schubumkehrvorrichtungen zu hemmen, wenn die Schubumkehrvorrichtungen (9, 10) angesteuert werden, damit sie von ihrer inaktiven, eingefahrenen Position in ihre aktive, ausgefahrene Position wechseln.

2. Flugzeug gemäß Anspruch 1 mit vier Triebwerken (5 bis 8), die von den Tragflächen (3, 4) des Flugzeuges getragen werden und paarweise symmetrisch zu dessen Rumpf (2) sind, so dass jede Tragfläche (3, 4) ein innen angeordnetes Triebwerk (5, 6) und ein außen angeordnetes Triebwerk (7, 8) trägt,
**dadurch gekennzeichnet, dass** die innen angeordneten Triebwerke (5, 6) mit Schubumkehrvorrichtungen (9, 10) ausgestattet sind, während die außen angeordneten Triebwerke (7, 8) keine haben.

3. Flugzeug gemäß einem der Ansprüche 1 oder 2,
**dadurch gekennzeichnet, dass** die Sicherheitsvorrichtung einen Detektor (33) aufweist, der erkennt, wenn die Schubumkehrvorrichtungen (9, 10) den Befehl zum Ausfahren erhalten, sowie Blockiermittel (36, 37), die von dem Detektor (33) angesteuert werden und die Triebwerke (7, 8) ohne Schubumkehrvorrichtungen im Leerlauf blockieren, wobei diese zuletzt genannten Triebwerke (7, 8) zuvor bewusst in den Leerlauf gebracht wurden.

4. Flugzeug gemäß Anspruch 3,
**dadurch gekennzeichnet, dass** die Blockiermittel (36, 37) die Gashebel (13, 14) der Triebwerke (7, 8) ohne Schubumkehrvorrichtungen in der Position, die dem Leerlauf entspricht, verriegeln, wobei diese zuletzt genannten Gashebel (13, 14) zuvor bewusst in diese Position gebracht wurden.

5. Flugzeug nach einem der Ansprüche 1 oder 2,
**dadurch gekennzeichnet, dass** die Sicherheitsvorrichtung einen Detektor (33, 43) aufweist, der erkennt, wenn die Schubumkehrvorrichtungen (9, 10) den Befehl zum Ausfahren erhalten, sowie Mittel (25, 26), welche die Triebwerke (7, 8) ohne Schubumkehrvorrichtungen unabhängig von der Drehzahl dieser zuletzt genannten Triebwerke (7, 8) in den Leerlauf bringen.

6. Flugzeug nach Anspruch 5,
**dadurch gekennzeichnet, dass** die Mittel (25, 26), welche die Triebwerke (7, 8) ohne Schubumkehrvorrichtungen in den Leerlauf bringen, die Kraftstoffversorgung dieser zuletzt genannten Triebwerke beeinflussen.

7. Flugzeug nach einem der Ansprüche 1 bis 6,
**dadurch gekennzeichnet, dass** die Sicherheitsvorrichtung die Wirkung der entsprechenden Gashebel (13, 14) der Triebwerke (7, 8) ohne Schubumkehrvorrichtungen hemmt, sobald wenigstens eine der Schubumkehrvorrichtungen den Befehl zum Ausfahren erhält.

8. Flugzeug nach einem der Ansprüche 1 bis 7,
**dadurch gekennzeichnet, dass** die Sicherheitsvorrichtung auf eine Information (G) reagiert, die angibt, dass das Flugzeug (1) Bodenberührung hat, und die Wirkung der entsprechenden Gashebel (13, 14) der Triebwerke (7, 8) ohne Schubumkehrvorrichtungen nur dann hemmt, wenn sich das Flugzeug (1) am Boden befindet.

9. Flugzeug nach einem der Ansprüche 1 bis 8,
**dadurch gekennzeichnet, dass** die Sicherheitsvorrichtung auf eine Information (V) reagiert, die einen Grenzwert der Bodengeschwindigkeit des Flugzeuges (1) darstellt, und die Wirkung der entsprechenden Gashebel (13, 14) der Triebwerke (7, 8) ohne Schubumkehrvorrichtungen nur dann hemmt, wenn die Bodengeschwindigkeit des Flugzeuges diesen Grenzwert überschreitet.

10. Flugzeug nach einem der Ansprüche 1 bis 9,
**dadurch gekennzeichnet, dass** die Sicherheitsvorrichtung auf Informationen (15L, 16L, 17L, 18L) reagiert, welche die jeweiligen Positionen der Gashebel (11 bis 14) darstellen, und die Wirkung der entsprechenden Gashebel (13, 14) der Triebwerke (7, 8) ohne Schubumkehrvorrichtungen nur dann hemmt, wenn sich alle Gashebel (11 bis 14) in einer Stellung befinden, die dem Leerlauf entspricht, eventuell mit Ausnahme von einem oder mehreren der Gashebel der Triebwerke (7, 8) ohne Schubumkehrvorrichtungen.

11. Flugzeug (1) nach Anspruch 10,
**dadurch gekennzeichnet, dass** es eine Warnvorrichtung (47) aufweist, die von der Sicherheitsvorrichtung in Betrieb gesetzt wird, wenn sich wenigstens ein entsprechender Gashebel eines der Triebwerke (7, 8) ohne Schubumkehrvorrichtungen nicht in der Position befindet, die dem Leerlauf entspricht.

12. Flugzeug (1) nach einem der Ansprüche 1 bis 11,
**dadurch gekennzeichnet, dass** die Sicherheitsvorrichtung die Triebwerke (7, 8) ohne Schubumkehrvorrichtungen für einen vorbestimmten Zeitraum nach Ende des Befehls zum Ausfahren der Schubumkehrvorrichtungen und deren Rückkehr von der aktiven, ausgefahrenen Position in die inaktive, eingefahrene Position im Leerlauf belässt.

## Claims

1. An aircraft (1) provided with a plurality of engines (5 to 8) whose speeds are controlled individually, between idling and full speed, by throttles (11 to 14) respectively associated with said engines,
**characterized in that** :
- certain (5, 6) of said engines of said plurality (5 to 8) are equipped with thrust reversers (9, 10) that can be controlled so as to be able to go from an inactive retracted position to an active deployed position and, conversely, from said active deployed position to said inactive retracted position;
- the other engines (7, 8) of said plurality (5 to 8) are devoid of thrust reversers, and
- a safety device (33, 36, 37 - 33, 25, 26 - 43, 25, 26) is provided so as to disable, at least from the position corresponding to idling, the action of the throttles (13, 14) corresponding to said engines (7, 8) devoid of thrust reversers, when said thrust reversers (9, 10) are controlled so as to go from their inactive retracted position to their active deployed position.

2. The aircraft as claimed in claim 1, comprising four engines (5 to 8) carried by the wings (3, 4) of said aircraft and pairwise symmetric with respect to the fuselage (2) of the latter, so that each wing (3, 4) carries an inboard engine (5, 6) and an outboard engine (7, 8)
**characterized in that** said inboard engines (5, 6) are provided with thrust reversers (9, 10) whereas said outboard engines (7, 8) are devoid thereof.

3. The aircraft as claimed in anyone of claims 1 or 2,
**characterized in that** said safety device comprises a detector (33) of the control of said thrust reversers (9, 10) to deployment and latching means (36, 37) controlled by said detector (33) and latching, when idling, said engines (7, 8) devoid of thrust reversers, these latter engines (7, 8) having previously been brought to idling through an intentional action.

4. The aircraft as claimed in claim 3,
**characterized in that** said latching means (36, 37) lock, in the position corresponding to idling, the throttles (13, 14) of said engines (7, 8) devoid of thrust reversers, the latter throttles (13, 14) having previously been brought to said position corresponding to idling through an intentional action.

5. The aircraft as claimed in claim 1 or 2,
**characterized in that** said safety device comprises a detector (33, 43) of the control of said thrust reversers (9, 10) to deployment and means (25, 26) imposing idling on said engines (7, 8) devoid of thrust reversers, irrespective of the speed of the latter engines (7, 8).

6. The aircraft as claimed in claim 5,
**characterized in that** said means (25, 26) imposing idling on said engines (7, 8) devoid of thrust reversers act on the fuel supply rate to the latter engines.

7. The aircraft as claimed in anyone of claims 1 to 6,
**characterized in that** said safety device disables the action of said throttles (13, 14), corresponding to said engines (7, 8) devoid of thrust reversers as soon as at least one of the thrust reversers is controlled to deployment.

8. The aircraft as claimed in anyone of claims 1 to 7,
**characterized in that** said safety device is sensitive to a cue (G) indicating that said aircraft (1) is in contact with the ground and does not disable the action of said throttles (13, 14) corresponding to said engines (7, 8) devoid of thrust reversers unless said aircraft (1) is on the ground.

9. The aircraft as claimed in anyone of claims 1 to 8,
**characterized in that** said safety device is sensitive to a cue (V) representative of a velocity threshold with respect to the ground of said aircraft (1) and does not disable the action of said throttles (13, 14) corresponding to said engines (7, 8) devoid of thrust reversers unless the velocity with respect to the ground of said aircraft is greater than said threshold.

10. The aircraft as claimed in anyone of claims 1 to 9,
**characterized in that** said safety device is sensitive to cues (15L, 16L, 17L, 18L) representative of the respective positions of said throttles (11 to 14) and does not disable the action of said throttles (13, 14) corresponding to said engines (7, 8) devoid of thrust reversers unless said throttles (11 to 14) are in a position corresponding to idling, except possibly one or more of the throttles corresponding to said engines (7, 8) devoid of thrust reversers.

11. The aircraft (1) as claimed in claim 10,
**characterized in that** it comprises an alarm device (47) activated by said safety device when at least one of the throttles corresponding to one of said engines (7, 8) devoid of thrust reversers is not in the position corresponding to idling.

12. The aircraft (1) as claimed in anyone of claims 1 to 11,
**characterized in that** said safety device maintains idling on said engines (7, 8) devoid of thrust reversers for a predetermined duration after the end of control to deployment of the thrust reversers and the return of the latter from the active deployment position to the inactive retracted position.
